# EUROPÄISCHE PATENTSCHRIFT

(11) **EP 2 987 910 B1**
(45) Veröffentlichungstag und Bekanntmachung des Hinweises auf die Patenterteilung: **03.01.2018**
(21) Anmeldenummer: 15180914.2
(22) Anmeldetag: 13.08.2015
(51) Int. Cl.: E01C 23/088, B65G 67/22, B65G 41/00

(54) **SELBSTFAHRENDE FRÄSMASCHINE, SOWIE VERFAHREN ZUM ABLADEN VON FRÄSGUT**
SELF-PROPELLED MILLING MACHINE, AND METHOD FOR UNLOADING MILLED GOODS
FRAISEUSE AUTOMOTRICE, ET PROCÉDÉ D'ÉVACUATION DE PRODUIT DE FRAISAGE

(30) Priorität: 21.08.2014 DE 102014216603
(43) Veröffentlichungstag der Anmeldung: 24.02.2016
(73) Patentinhaber: Wirtgen GmbH, 53578 Windhagen (DE)
(72) Erfinder: Berning, Christian, 53909 Zülpich (DE); Barimani, Cyrus, 53639 Königswinter (DE); Hähn, Günter, 53639 Königswinter (DE)
(74) Vertreter: dompatent von Kreisler Selting Werner - Partnerschaft von Patent- und Rechtsanwälten mbB

(56) Entgegenhaltungen:
- EP-A1- 2 573 267
- EP-A1- 2 700 748

## Beschreibung

Die Erfindung betrifft eine selbstfahrende Fräsmaschine nach dem Oberbegriff des Anspruchs 1, ein Verfahren zum Abladen von Fräsgut nach dem Oberbegriff des Anspruchs 9, sowie eine Straßen- oder Bodenbearbeitungseinheit nach Anspruch 13.

Bei einer selbstfahrenden Fräsmaschine ist es bekannt, das Fräsgut auf mindestens ein Transportfahrzeug mit einer Ladefläche abzuladen.

Die Fräsmaschine weist eine Steuerung für den Fahr- und Fräsbetrieb auf sowie eine Arbeitswalze zum Fräsen z. B. eines Straßenbelages. Vor oder hinter der Arbeitswalze - in Fahrtrichtung gesehen - befindet sich eine Transportbandeinrichtung, z. B. eine Transportbandeinrichtung mit mindestens einem Transportband. Die Transportbandeinrichtung weist ein Abwurfende auf, an dem das Fräsgut aufgrund der Fördergeschwindigkeit über eine Flugbahn in Form einer Wurfparabel auf die Ladefläche des mindestens einen Transportfahrzeugs abgeladen wird. Das in Transportrichtung letzte oder einzige Transportband der Transportbandeinrichtung kann relativ zur Längsachse der Fräsmaschine seitlich unter einem vorgebbaren Schwenkwinkel nach links oder rechts verschwenkt werden und über einen vorgebbaren Höhenwinkel höhenverstellbar sein. Auch kann die Fördergeschwindigkeit des Transportbandes einstellbar sein.

Im praktischen Betrieb entstehen Probleme bei der Koordination der Fräsmaschine mit dem Transportfahrzeug.

Beispielsweise wird bei einer Vorderlader-Fräsmaschine das Fräsgut nach vorne auf das vorausfahrende Transportfahrzeug abgeworfen. Die Bedienungsperson für die Fräsmaschine muss dem Fahrzeugführer des Transportfahrzeuges signalisieren, wann sich das Transportfahrzeug weiter nach vorne bewegen und wann es anhalten soll. Dies führt zu Problemen, weil sich die Bedienungsperson im Grunde genommen auf den Fräsbetrieb konzentrieren muss und gleichzeitig eine Kollision mit dem vorausfahrenden Transportfahrzeug vermeiden muss. Üblicherweise geschieht die Vermittlung der Information über ein Hupen, so dass, sobald der Fahrzeugführer des Transportfahrzeugs das Hupen vernimmt, das Transportfahrzeug um eine bestimmte Wegstrecke vorbewegt wird. Problematisch ist dabei die Situation, in der der Fahrzeugführer des Transportfahrzeugs das Hupsignal überhört, oder wenn ein anderes vorbeifahrendes Fahrzeug ein Hupsignal abgibt. Mit dieser Problematik befasst sich die DE 10 2009 041 842 A. Es können folgende Probleme auftreten: Überhört der Fahrzeugführer das Hupsignal und fährt dieser nicht das Transportfahrzeug vor, kann es zu einer Kollision des schwenkbaren Transportbandes der Transportbandeinrichtung mit dem Transportfahrzeug kommen, oder die Bedienungsperson der Fräsmaschine muss den kontinuierlichen Fräsbetrieb stoppen.

Aus der EP 2 573 267 A1 ist eine automatische Abstandsbestimmung zwischen einer Transporteinrichtung und einer Fräsvorrichtung mit einer automatisierten Steuerung einer Anzeigevorrichtung bekannt. Mittels der Anzeigevorrichtung können Steuersignale zur Koordination des Beladungsprozesses optisch, akustisch oder haptisch automatisiert ausgegeben werden.

Wenn ein anderes vorbeifahrendes Fahrzeug ein Hupsignal abgibt, kann der Fahrzeugführer des Transportfahrzeugs irrtümlich der Auffassung sein, sein Fahrzeug anhalten zu müssen. Auch hier besteht Kollisionsgefahr.

Ein weiteres Problem besteht darin, dass die Bedienungsperson für die Fräsmaschine auch die Beladung der Ladefläche durch Verstellung des Schwenkwinkels, des Höhenwinkels und der Fördergeschwindigkeit des in Transportrichtung letzten oder einzigen Transportbandes der Transportbandeinrichtung übernehmen muss und dadurch von seiner eigentlichen Aufgabe, den Fräsbetrieb durchzuführen, abgelenkt wird. Eine Korrektur des Schwenkwinkels kann beispielsweise bei einem Wechsel der Lenkrichtung der Fräsmaschine notwendig sein.

Aus der EP 2 700 748 A1 ist ein Erfassungs- und Steuerungssystem für eine Fräsmaschine bekannt, wobei das Erfassungs- und Steuerungssystem zumindest den Lenkeinschlag der Lenkungssteuerung für das Fahrwerk oder zumindest den Lenkeinschlag der Lenkungssteuerung und die zurückgelegte Fahrstrecke oder die Fahrgeschwindigkeit erfasst und in Abhängigkeit dieses mindestens einen Parameters beispielsweise den Schwenkwinkel des Transportbandes steuert.

Auch im Falle einer Hinterlader-Fräsmaschine bestehen Probleme bei der Koordination der Fräsmaschine mit dem Transportfahrzeug, zumal das Transportfahrzeug in Rückwärtsfahrt hinter der Fräsmaschine hinterherfahren muss. Für die Bedienungsperson der Fräsmaschine ergibt sich eine noch höhere Belastung, da sie einerseits den Fräsbetrieb in Vorwärtsfahrt steuern muss und andererseits die Beladung des Transportfahrzeugs in Fahrtrichtung hinter der Fräsmaschine beobachten muss, den Schwenkwinkel, den Höhenwinkel und/oder die Fördergeschwindigkeit der Transportbandeinrichtung steuern muss und dem Fahrzeugführer die notwendigen Informationen vermitteln muss.

Grundsätzlich ist es bekannt, den Abstand zwischen der Fräsmaschine und dem Transportfahrzeug mit Hilfe von Ultraschallmesssystemen oder sonstigen Entfernungsmesssystemen zu messen, um Kollisionen zwischen der Fräsmaschine und dem Transportfahrzeug zu vermeiden. Problematisch ist dabei, dass die unterschiedlichen Transportfahrzeuge keine gleichbleibende Referenzfläche aufweisen, auf die sich die Entfernungsmessung beziehen könnte. Eine unterschiedliche Höhe der Rückwand der Transportfahrzeuge und eine unterschiedliche Steigung des Transportbands, in Verbindung mit unterschiedlichen Schwenkwinkeln des Transportbandes führen zu Kollisionen des Transportbands mit der Rückwand bei völlig unterschiedlichen Abständen zwischen der Fräsmaschine und dem Transportfahrzeug. Grundsätzlich besteht das Problem, dass ein Sensor auf nicht klar definierte Referenzflächen unterschiedlicher Transportfahrzeuge nur unter erheblichen Schwierigkeiten ausgerichtet werden kann. Weitere Probleme bestehen, wenn das Transportfahrzeug nicht geradlinig mit der Fräsmaschine ausgerichtet ist oder der Transportbehälter des Transportfahrzeugs eine schräge oder jedenfalls nicht vertikale Rückwand aufweist. Abstandsmesssysteme versagen insbesondere, wenn das Transportfahrzeug seitlich versetzt zu der Fräsmaschine bewegt wird und das Transportband mit einer Ecke des Behälters kollidieren kann.

Der Erfindung liegt daher die Aufgabe zugrunde, eine selbstfahrende Fräsmaschine, sowie ein Verfahren zum Abladen von Fräsgut einer Fräsmaschine anzugeben, die in allen Betriebssituationen Beschädigungen an der Fräsmaschine bei der Koordination des Abladevorgangs verhindern.

Zur Lösung dieser Aufgabe dienen die Merkmale der Ansprüche 1 bzw. 9.

Die Erfindung sieht in vorteilhafter Weise vor, dass die Detektionseinrichtung im Falle der Annäherung des Transportbandes an einen Gegenstand, insbesondere an die Rückwand der Ladefläche, ein Aktivierungssignal an die Steuerung auslöst, wobei die Steuerung beim Vorliegen eines Aktivierungssignals ein Steuersignal zur Verringerung der Vortriebsgeschwindigkeit oder zum Maschinenstopp erzeugt und/oder den Höhenwinkel des Transportbandes vergrößert.

Mit Hilfe der an der Unterseite des Transportbandes angeordneten Detektionseinrichtung kann zuverlässig eine Kollision mit dem Behälter des Transportfahrzeugs verhindert werden, und zwar unabhängig von dem eingestellten Höhenwinkel oder Schwenkwinkel des Transportbandes, unabhängig von der relativen Winkellage des Transportfahrzeugs zu der Fräsmaschine und unabhängig von der Behälterform an der Rückwand und der Höhe der Rückwand des Behälters. Ein besonderer Vorteil der Detektionseinrichtung besteht darin, dass es von den Bewegungen des Transportfahrzeugs und der Fräsmaschine relativ zueinander unabhängig ist.

Vorzugsweise ist vorgesehen, dass die Detektionseinrichtung mindestens ein flächenförmiges oder mindestens ein linienförmiges Tastelement aufweist. Ein derartiges Tastelement kann an der Unterseite des Transportbandes über eine längere Strecke unterhalb des Transportbandes einen Kontakt mit einem Gegenstand frühzeitig und unabhängig von der Schwenkstellung des Transportbandes detektieren.

Vorzugsweise ist vorgesehen, dass sich das Tastelement symmetrisch zu einer Längsmittelachse des Transportbandes erstreckt und/oder sich mit im Wesentlichen parallelen Abstand zu dem Transportband erstreckt. Auf diese Weise kann eine Kollision rechtzeitig erkannt werden, ohne dass das Transportband an der Unterseite und oder der Kollisionsgegenstand beschädigt wird.

Das Tastelement kann flexibel sein und aus einem Zugseil oder aus einem flexiblen Flächengebilde bestehen und erstreckt sich linear. Das flexible Tastelement kann auch zur Einhaltung eines im Wesentlichen gleichmäßigen Abstandes zur Unterseite des Transportbandes und zur Anpassung an eine gekrümmte Form des Transportbandes auch umlenkbar sein.

Alternativ ist das Tastelement starr und besteht aus einem z. B. rechteckförmigen Plattenelement.

Das flexible oder starre Tastelement der Detektionseinrichtung wirkt im Falle eines Kontaktes mit der Rückwand einer Ladefläche oder einem anderen Gegenstand auf den Sensor ein, der das Aktivierungssignal erzeugt und an die Steuerung leitet.

Bei einem flexiblen Tastelement kann an den Enden des Elements eine Zugkraft detektiert werden, die durch die Auslenkung des Tastelements entsteht. Ein starres Tastelement kann beispielsweise parallelogrammartig an dem Transportband befestigt sein, so dass die Auslenkung der Aufhängung durch den Sensor detektiert werden kann.

Alternativ oder zusätzlich kann vorgesehen sein, dass die Steuerung beim Vorliegen eines Aktivierungssignals ein Alarmsignal und/oder ein Signal zur Verlangsamung der Förderbandgeschwindigkeit erzeugt.

Die Verlangsamung der Förderbandgeschwindigkeit dient dazu, sicherzustellen, dass kein Fräsgut auf das Dach des Führerhauses des Transportfahrzeuges abgeladen wird, indem die Wurfparabel für das Fräsgut verkürzt wird.

Das Tastelement kann mit mindestens einem mechanisch betätigbaren oder kapazitiven oder induktiven oder optoelektronischen Sensor gekoppelt sein.

Alternativ kann das Tastelement aus mehreren linear oder flächig verteilt angeordneten kapazitiven oder induktiven oder optoelektronischen Sensoren gebildet sein.

Nach einer weiteren Alternative kann das Tastelement aus mindestens einer Lichtschranke gebildet sein.

Es kann ein Fortbewegungs-Steuerungssignal z. B. ein optisches oder akustisches Signal in Abhängigkeit von dem Aktivierungssignal erzeugt werden. Fortbewegungs-Steuerungssignale für das Transportfahrzeug sind grundsätzlich in der DE 10 2009 041 842 A1 beschrieben.

Zur Lösung der Aufgabe dienen auch die Merkmale des Anspruchs 9.

Nach dem erfindungsgemäßen Verfahren ist vorgesehen, dass die Detektionseinrichtung im Falle der Annäherung des Transportbandes an einen Gegenstand, insbesondere die Rückwand der Ladefläche, ein Aktivierungssignal erzeugt und beim Vorliegen eines Aktivierungssignals ein Steuersignal zur Verringerung der Vortriebsgeschwindigkeit oder zum Maschinenstopp erzeugt wird und/oder der Höhenwinkel des Transportbandes vergrößert wird..

Bei einem bevorzugten Ausführungsbeispiel ist vorgesehen, dass die Steuerung eine Erfassungs- und Steuereinheit aufweist, die die Positionierung einer Auftreffstelle des Fräsgutes automatisch steuert.

Eine derartige Steuerung ermöglicht es, dass sich die Bedienungsperson der Fräsmaschine auf den Fräsbetrieb und die Fahrt entlang einer vorgegebenen Frässpur konzentrieren kann. Auf diese Weise ist ein automatischer Abladevorgang realisiert, der auch bei Kurvenfahrt für eine automatische Koordination des Abladevorgangs mit der Bewegung der Fräsmaschine und des Transportfahrzeugs sorgt. Beispielsweise kann auch der Schwenkwinkel des in Transportrichtung letzten oder einzigen Transportbandes der Transportbandeinrichtung in Abhängigkeit vom Lenkwinkel der selbstfahrenden Fräsmaschine steuerbar sein.

Im Folgenden werden unter Bezugnahme auf die Zeichnungen Ausführungsbeispiele der Erfindung näher erläutert.

Es zeigen:
- Fig. 1: eine Vorderlader-Straßenfräsmaschine,
- Fig. 2: eine Hinterlader-Straßenfräsmaschine,
- Fig. 3: eine Draufsicht auf eine Fräsmaschine gemäß Fig. 1,
- Fig. 4: ein weiteres Ausführungsbeispiel,
- Fig. 5: eine Ansicht von der Unterseite des Transportbandes gemäß Fig. 1,
- Fig. 6: ein alternatives Ausführungsbeispiel
- Fig. 7: ein weiteres Ausführungsbeispiel mit flächig angeordneten Sensoren, und
- Fig. 8: ein Ausführungsbeispiel mit einer Lichtschranke.

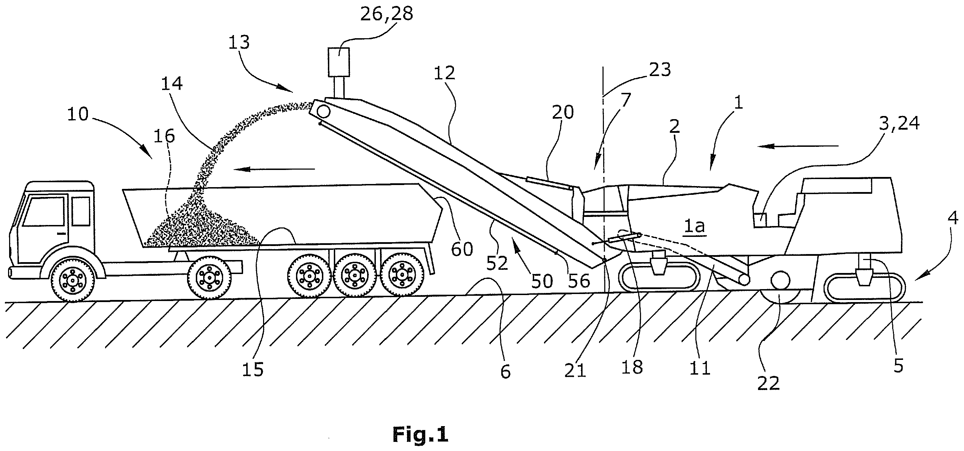

Fig. 1 zeigt eine Fräsmaschine 1 am Beispiel einer Vorderlader-Straßenfräsmaschine 1a. Die Fräsmaschine 1 weist einen Maschinenrahmen 2 auf, der von einem beispielsweise aus Kettenlaufwerken oder Rädern bestehenden Fahrwerk 4 getragen wird, das über mindestens drei Höhenverstelleinrichtungen in Form von Hubsäulen 5 mit dem Maschinenrahmen 2 verbunden ist. Wie aus Fig. 1 ersichtlich, sind bei dem Ausführungsbeispiel vier Hubsäulen 5 vorgesehen, mit denen der Maschinenrahmen 2 in eine vorgebbare Ebene gebracht werden kann, die vorzugsweise parallel zur Straßenoberfläche 6 verläuft, auf denen die Kettenlaufwerke des Fahrwerks 4 stehen.

Die in Fig. 1 gezeigte Straßenfräsmaschine weist eine Arbeitswalze 22 in Längsrichtung der Fräsmaschine 1a zwischen den Kettenlaufwerken des Fahrwerks 4 auf.

Die Fräsmaschinen 1a, 1b können Kettenlaufräder und/oder Räder aufweisen. Die Arbeitswalze kann über die den Maschinenrahmen 2 tragenden Hubsäulen 5 oder relativ zu dem Maschinenrahmen 2 höhenverstellbar sein.

Andere Bauformen einer Fräsmaschine 1b können die Arbeitswalze 22 beispielsweise auch in Höhe der hinteren Kettenlaufwerke oder Räder des Fahrwerks 4 aufweisen.

Ebenso kann die Transportbandeinrichtung mit mindestens einem Transportband 11,12 zum Abtransport des abgefrästen Fräsgutes am vorderen 7 oder hinteren Ende 8 der Fräsmaschine 1a, 1b angeordnet sein.

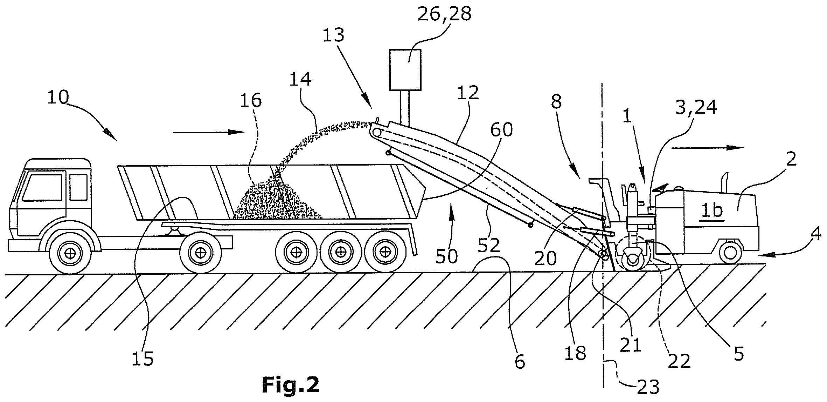

Fig.2 zeigt das Beispiel einer Hinterlader-Fräsmaschine 1b, bei der das Transportfahrzeug 10 in Rückwärtsfahrt hinter der Fräsmaschine 1 hinterherfährt.

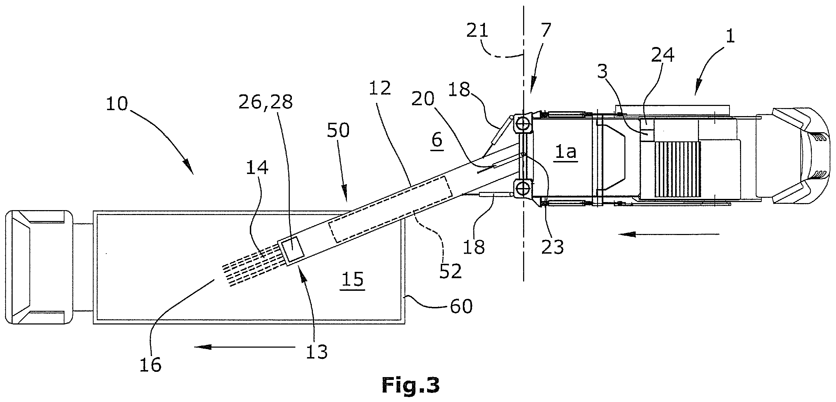

Sofern seitlich neben der Fräsmaschine 1a, 1b ausreichend Platz zur Verfügung steht, kann das Transportfahrzeug 10, wie in Fig. 3 gezeigt, auch in Vorwärtsfahrt vor der Fräsmaschine 1 auf einer anderen Fahrspur bewegt werden.

Die-Fahrtrichtungen der jeweiligen Fahrzeuge sind in den Fign. 1 bis 3 jeweils durch Pfeile angezeigt.

Bei dem Ausführungsbeispiel der Fig. 1 wird das von der Arbeitswalze 22 abgefräste Fräsgut über ein erstes ortsfestes Transportband 11 der Transportbandeinrichtung, das das Fräsgut 14 auf ein zweites schwenkbares Transportband 12 überträgt, auf die Ladefläche 15 des Transportfahrzeugs 10 abgeladen. Aufgrund der Geschwindigkeit des Transportbandes 12 wird das Fräsgut 14 nicht unmittelbar am Ende des Transportbandes 12 abgeladen, sondern das Fräsgut folgt einer Wurfparabel, so dass die Auftreffstelle 16 auf der Ladefläche 15 mit Abstand von dem freien Ende 13 des Transportbandes 12 befindlich ist. Das Transportband 12 kann aus einer Mittelposition heraus nach links oder nach rechts über Kolben-Zylindereinheiten 18 verschwenkt werden, um das Fräsgut 14 auch bei Kurvenfahrt bzw. bei spurversetztem Fahren des Transportfahrzeugs 10 auf die Ladefläche 15 abladen zu können. Des Weiteren kann der Fahrzeugführer der Fräsmaschine 1a, 1b den Höhenwinkel des Transportbandes 12 mit Hilfe einer KolbenZylindereinheit 20 einstellen. Der Höhenwinkel beeinflusst ebenso wie die Fördergeschwindigkeit des Transportbandes 12 die Wurfparabel des Fräsgutes 14 und die Position der Auftreffstelle 16.

Der aktuell eingestellte Höhenwinkel um eine horizontale erste Achse 21 bzw. Schwenkwinkel um eine vertikale zweite Achse 23 wird an eine Erfassungs- und Steuereinheit 24 gemeldet, die des Weiteren mindestens einen Detektor 26 aufweist, der die Lage der Ladefläche 15 und/oder des in Transportrichtung letzten oder einzigen Transportbandes 12 fortlaufend detektiert. Dieser Detektor 26 kann entweder an der Fräsmaschine 1a, 1b an dem der Transportbandeinrichtung zugewandten Ende oder an dem freien Ende 13 des Transportbandes 12 angeordnet sein.

Die Erfassungs- und Steuereinheit 24 kann in die Steuerung 3 für den Fahr- und Fräsbetrieb integriert sein oder mit dieser zumindest verbunden sein, um ggf. auch Daten über die Fahrgeschwindigkeit und/oder einen detektierten Lenkwinkel der Fräsmaschine 1a, 1b und die Fördergeschwindigkeit des Transportbandes 12 zu erhalten.

Die Fign. 1 und 2 zeigen an der Unterseite des Transportbandes 12 eine Detektionseinrichtung 50, die ein linienförmiges Tastelement 52 aufweist. Das Tastelement 52 kann beispielsweise aus mindestens einem seil- oder drahtförmigen Element bestehen, das im Wesentlichen parallel mit Abstand von dem Transportband 12 verläuft und an seinen Enden derart eingespannt ist, dass mindestens ein Sensor 56 eine Auslenkung des Tasters 52 feststellen kann.

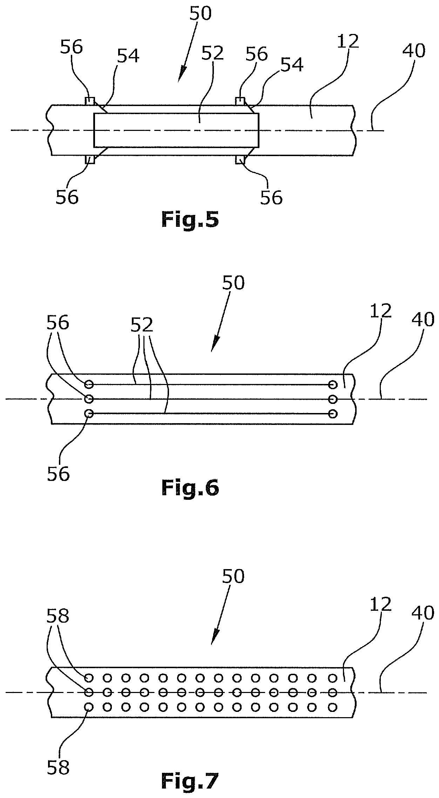

Das Tastelement 52 verläuft vorzugsweise symmetrisch zu einer Längsmittelachse 40 des Transportbandes 12, wie am besten aus den Fign. 5 und 6 ersichtlich ist. Das Tastelement 52 kann beispielsweise aus Drahtseilen gebildet sein (Fig. 6) oder aus einem flexiblen Flächengebilde, das in ähnlicher Weise wie die linienförmiges Tastelement derart befestigt ist, dass eine Auslenkung des Flächengebildes bei Kontakt mit einem Gegenstand oder mit der Rückwand 60 des Transportfahrzeugs 10 über mindestens einen Sensor 56 ein Aktivierungssignal auslöst, das der Steuerung 3 zuführbar ist.

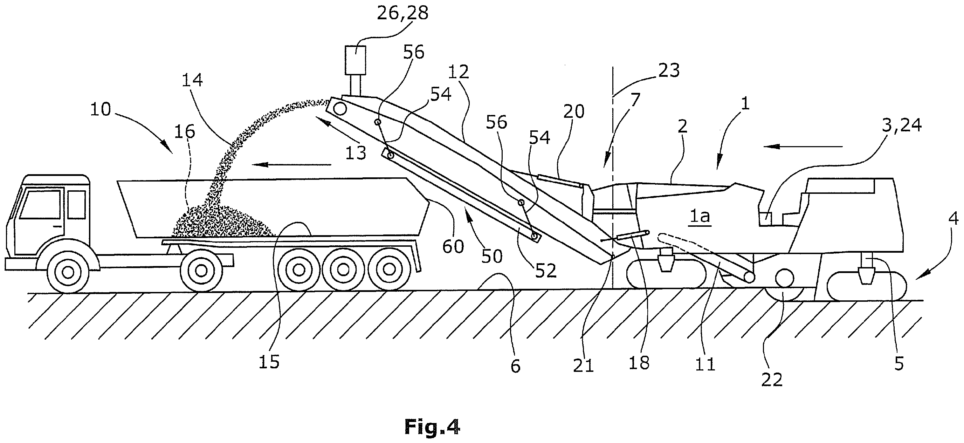

Das Tastelement kann auch aus einem starren Plattenelement bestehen, das, wie in den Fign. 4 und 5 gezeigt, parallelogrammartig an dem Transportband 12 befestigt ist. Die Sensoren 56 können dabei z. B. als Drehwinkelsensoren gestaltet sein, die an den Gelenken eine Bewegung der Aufhängung 54 detektieren können. Es versteht sich, dass das plattenförmige Tastelement 52 z.B. durch Federkraft in seiner unbelasteten Position gehalten werden kann und erst im Falle eines Kontaktes mit einem Gegenstand ausgelenkt wird.

Die Tastelemente 52 können jeweils mit mindestens einem mechanisch betätigbaren Sensor oder mit einem kapazitiven oder induktiven oder optoelektronischen Sensor gekoppelt sein.

Nach einer in Fig. 7 dargestellten Alternative, kann die Detektionseinrichtung 50 in den Bereichen der in den Fign. 1 bis 6 ersichtlichen flexiblen oder starren Tastelemente 52 aus mehreren linear oder flächig verteilt angeordneten kapazitiven oder induktiven oder optoelektronischen Sensoren 58 gebildet sein.

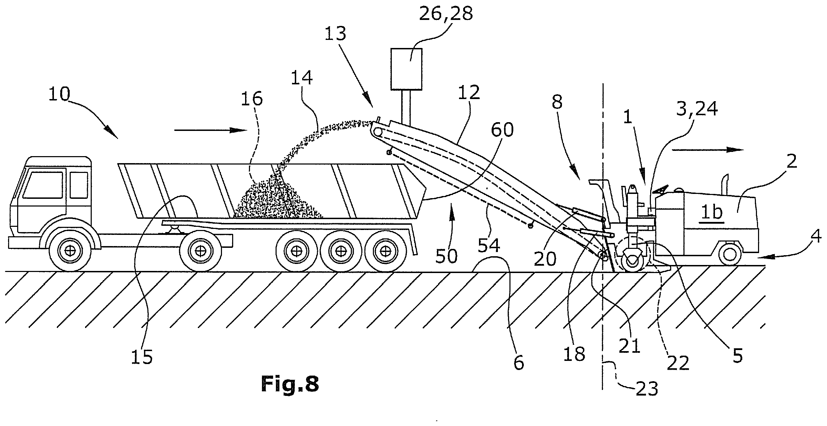

Nach einer weiteren in Fig. 8 gezeigten Alternative kann die Detektionseinrichtung 50 z. B. in den aus den Fign. 1 bis 6 ersichtlichen Bereichen der flexiblen oder starren Tastelemente 52 aus mindestens einer Lichtschranke 54 gebildet sein.

Die Längserstreckung der Detektionseinrichtung 50 kann sich im Wesentlichen über den überwiegenden Teil der Länge des Transportbandes 12 erstrecken, wie in Fig. 1 gezeigt oder sich nur auf einen interessierenden Teilbereich erstrecken, wie in den Fign. 2 und 4 dargestellt.

Die Erfassungs- und Steuereinheit 24 kann die veränderliche Lage der Ladefläche 15 des Transportfahrzeugs 10 und des Transportbandes 12 relativ zum Maschinenrahmen 2 orten und die Positionierung der Auftreffstelle 16 des Fräsgutes 14 über den Schwenkwinkel und/oder den Höhenwinkel und/oder die Fördergeschwindigkeit der Transportbandeinrichtung fortlaufend und automatisch steuern, so dass das abgeworfene Fräsgut 14 zumindest innerhalb der Ladefläche 15 auftrifft. Alternativ kann auch die veränderliche Lage der Ladefläche 15 des Transportfahrzeugs 10 relativ zu dem Transportband 12 fortlaufend geortet werden, um die Steuerung durchzuführen.

## Patentansprüche

1. Selbstfahrende Fräsmaschine (1),
- mit einem Maschinenrahmen (2),
- mit einer Steuerung (3) für den Fahr- und Fräsbetrieb,
- mit einer Arbeitswalze (22),
- mit einem Transportband (12), zum Abladen des von der Arbeitswalze (22) abgefrästen Fräsgutes (14) auf eine Ladefläche (15) eines Transportfahrzeugs (10) mit einer Rückwand (60),
- wobei das Transportband (12) relativ zum Maschinenrahmen (2) um eine im Wesentlichen horizontal verlaufende erste Achse (21) unter einem Höhenwinkel, und um eine orthogonal zur ersten Achse (21) verlaufende zweite Achse (23) seitlich unter einem Schwenkwinkel verschwenkbar ist, und
- wobei an der Unterseite des Transportbandes (12) eine Detektionseinrichtung (50) für den Fall der Annäherung des Transportbandes (12) an einen Gegenstand angeordnet ist,
**dadurch gekennzeichnet,dass**
die Detektionseinrichtung (50) im Falle der Annäherung des Transportbandes (12) an einen Gegenstand, insbesondere an die Rückwand (60) der Ladefläche (15), ein Aktivierungssignal an die Steuerung (3) auslöst, wobei
die Steuerung (3) beim Vorliegen eines Aktivierungssignals ein Steuersignal zur Verringerung der Vortriebsgeschwindigkeit oder zum Maschinenstopp erzeugt und/oder den Höhenwinkel des Transportbandes (12) vergrößert.

2. Fräsmaschine (1) nach Anspruch 1, **dadurch gekennzeichnet, dass** die Detektionseinrichtung (50) mindestens ein flächenförmiges oder mindestens ein linienförmiges Tastelement (52) aufweist.

3. Fräsmaschine (1) nach Anspruch 2, **dadurch gekennzeichnet, dass** das Tastelement (52) sich symmetrisch zu einer Längsmittelachse (40) des Transportbandes (12) erstreckt und/oder sich mit im Wesentlichen parallelen Abstand zu dem Transportband (12) erstreckt.

4. Fräsmaschine (1) nach Anspruch 2 oder 3, **dadurch gekennzeichnet, dass** das Tastelement (52) der Detektionseinrichtung (50) im Falle eines Kontaktes mit einem Gegenstand auf einen Sensor (56) einwirkt, der das Aktivierungssignal erzeugt.

5. Fräsmaschine (1) nach einem der Ansprüche 1 bis 4, **dadurch gekennzeichnet, dass** die Steuerung (3) beim Vorliegen eines Aktivierungssignals ein Alarmsignal und/oder ein Signal zur Verlangsamung der Förderbandgeschwindigkeit erzeugt.

6. Fräsmaschine (1) nach einem der Ansprüche 2 bis 5, **dadurch gekennzeichnet, dass** das Tastelement (52) mit mindestens einem mechanisch betätigbaren oder kapazitiven oder induktiven oder optoelektronischen Sensor (56) gekoppelt ist.

7. Fräsmaschine (1) nach Anspruch 2, **dadurch gekennzeichnet, dass** das Tastelement (52) aus mehreren linear oder flächig verteilt angeordneten kapazitiven oder induktiven oder optoelektronischen Sensoren (56) gebildet ist.

8. Fräsmaschine (1) nach Anspruch 2 oder 3, **dadurch gekennzeichnet, dass** das Tastelement (52) aus mindestens einer Lichtschranke gebildet ist.

9. Verfahren zum Abladen von abgearbeitetem Fräsgut (14) einer selbstfahrenden Fräsmaschine (1) auf einer Ladefläche (15) eines Transportfahrzeuges (10), bei dem
- die Fräsmaschine (1) für den Fahr- und Fräsbetrieb gesteuert wird,
- das von einer Arbeitswalze (22) abgearbeitete Fräsgut (14) mit einem relativ zum Maschinenrahmen (2) der Fräsmaschine (1) seitlich unter einem Schwenkwinkel verschwenkbaren und hinsichtlich der Abwurfhöhe unter einem Höhenwinkel verstellbaren Transportband (12) auf die Ladefläche (15) eines Transportfahrzeugs (10) abgeworfen wird, und
- an der Unterseite des Transportbandes (12) eine Detektionseinrichtung (50) für den Fall der Annäherung des Transportbandes (12) an einen Gegenstand verwendet wird,
**dadurch gekennzeichnet, dass**
die Detektionseinrichtung im Falle der Annäherung des Transportbandes (12) an einen Gegenstand ein Aktivierungssignal erzeugt und beim Vorliegen eines Aktivierungssignals ein Steuersignal zur Verringerung der Vortriebsgeschwindigkeit oder zum Maschinenstopp erzeugt wird und/oder der Höhenwinkel des Transportbandes (12) vergrößert wird.

10. Verfahren nach Anspruch 9, **dadurch gekennzeichnet, dass** für die Detektionseinrichtung (50) mindestens ein flächenförmiges oder mindestens ein linienförmiges Tastelement (52) verwendet wird.

11. Verfahren nach einem der Ansprüche 9 bis 10, **dadurch gekennzeichnet, dass** beim Vorliegen eines Aktivierungssignals ein Alarmsignal oder ein Signal zur Verlangsamung der Förderbandgeschwindigkeit erzeugt wird.

12. Verfahren nach einem der Ansprüche 9 bis 11, **dadurch gekennzeichnet, dass** die Positionierung einer Auftreffstelle (16) des Fräsgutes (14) auf der Ladefläche (15) automatisch gesteuert wird.

13. Straßen- oder Bodenbearbeitungseinheit bestehend aus einer selbstfahrenden Fräsmaschine (1) und mindestens einem von der Fräsmaschine (1) unabhängig verfahrbaren und relativ zu der Fräsmaschine (1) derart positionierbaren Transportfahrzeug (10), das das von der Fräsmaschine (1) abgearbeitete Fräsgut (14) auf das Transportfahrzeug (10) abladbar ist,
**gekennzeichnet durch**
eine Fräsmaschine (1) mit den Merkmalen der Ansprüche 1 bis 8.

## Claims

1. Automotive milling machine (1),
- comprising a machine frame (2),
- comprising a controller (3) for the travelling and milling operation,
- comprising a working drum (22),
- comprising a transport conveyor (12) for discharging the milled material (14) milled off by the working drum (22) onto a loading surface (15) of a transport vehicle (10) comprising a rear wall (60),
- where the transport conveyor (12) is slewable, relative to the machine frame (2), about a first axis (21) extending essentially horizontally under an elevation angle, and sideways about a second axis (23) extending orthogonally to the first axis (20) under a slewing angle, and
- a detection device (50) is arranged on the bottom side of the transport conveyor (12), in case of the transport conveyor (12) approaching an object,
**characterized in that**
said detection device (50) is used to initiate an activation signal to the controller (3) in case of the transport conveyor (12) approaching an object, in particular, the rear wall (60) of the loading surface (15), wherein the controller (3), in the presence of an activation signal, generates a control signal for the reduction of the advance speed or for machine stoppage, and/or increases the elevation angle of the transport conveyor (12).

2. Milling machine (1) in accordance with claim 1, **characterized in that** the detection device (50) comprises no less than one planar-shaped or no less than one linear-shaped sensing element (52).

3. Milling machine (1) in accordance with claim 2, **characterized in that** the sensing element (52) extends symmetrically to a longitudinal centre line (40) of the transport conveyor (12) and/or extends at an essentially parallel distance to the transport conveyor (12).

4. Milling machine (1) in accordance with claim 2 or 3, **characterized in that** the sensing element (52) of the detection device (50), in case of contact with an object, acts on a sensor (56) which generates the activation signal.

5. Milling machine (1) in accordance with one of the claims 1 to 4, **characterized in that** the controller (3), in the presence of an activation signal, generates an alarm signal and/or a signal for the reduction of the conveyor belt speed.

6. Milling machine (1) in accordance with one of the claims 2 to 5, **characterized in that** the sensing element (52) is coupled to no less than one mechanically operatable or capacitive or inductive or optoelectronic sensor (56).

7. Milling machine (1) in accordance with claim 2, **characterized in that** the sensing element (52) is formed of multiple capacitive or inductive or optoelectronic sensors (56) arranged in a linearly or planarly distributed fashion.

8. Milling machine (1) in accordance with claim 2 or 3, **characterized in that** the sensing element (52) is formed of no less than one light barrier.

9. Method for discharging worked-off milled material (14) of an automotive milling machine (1) onto a loading surface (15) of a transport vehicle (10), where
- the milling machine (1) is controlled for the travelling and milling operation,
- the milled material (14) worked off by a working drum (22) is discharged onto the loading surface (15) of a transport vehicle (10) by a transport conveyor (12) which is slewable sideways relative to the machine frame (2) of the milling machine (1) under a slewing angle and adjustable under an elevation angle with regard to the discharge height, and
- a detection device (50) is used on the bottom side of the transport conveyor (12) for the event of the transport conveyor (12) approaching an object,
**characterized in that**
the detection device, in the event of the transport conveyor (12) approaching an object, generates an activation signal and, in the presence of an activation signal, a control signal is generated for the reduction of the advance speed or for machine stoppage, and/or the elevation angle of the transport conveyor (12) is increased.

10. Method in accordance with claim 9, **characterized in that** no less than one planar-shaped or no less than one linear-shaped sensing element (52) is used for the detection device (50).

11. Method in accordance with one of the claims 9 to 10, **characterized in that**, in the presence of an activation signal, an alarm signal or a signal for the reduction of the conveyor belt speed is generated.

12. Method in accordance with one of the claims 9 to 11, **characterized in that** positioning of a point of impingement (16) of the milled material (14) on the loading surface (15) is controlled automatically.

13. Road or ground working unit comprising an automotive milling machine (1) and no less than one transport vehicle (10) movable independently of the milling machine (1) and positionable relative to the milling machine (1) in such a fashion that the milled material (14) worked off by the milling machine (1) is dischargeable onto the transport vehicle (10),
**characterized by**
a milling machine (1) comprising the features of claims 1 to 8.

## Revendications

1. Engin de fraisage automoteur (1) comprenant
- un châssis d'engin (2),
- une commande (3) destinée à l'opération de conduite et de fraisage,
- un rouleau de travail (22),
- une bande transporteuse (12) destinée au déchargement du matériau fraisé (14) par le rouleau de travail (22) sur une surface de chargement (15), munie d'une paroi arrière (60), d'un véhicule de transport (10),
- la bande transporteuse (12) pouvant pivoter latéralement par rapport au châssis d'engin (2) d'un angle de pivotement sur un premier axe (21), qui s'étend sensiblement horizontalement, en formant un angle d'élévation et sur un second axe (23) qui s'étend perpendiculairement au premier axe (21), et
- un dispositif de détection (50) étant disposé sur la face inférieure de la bande transporteuse (12) dans le cas où la bande transporteuse (12) s'approche d'un objet, **caractérisé en ce que**
le dispositif de détection (50) active un signal d'activation de la commande (3) dans le cas où la bande transporteuse (12) s'approche d'un objet, en particulier de la paroi arrière (60) de la surface de chargement (15),
en présence d'un signal d'activation, la commande générant un signal de commande (3) pour réduire la vitesse de propulsion ou pour arrêter l'engin et/ou augmentant l'angle d'élévation de la bande transporteuse (12).

2. Engin de fraisage (1) selon la revendication 1, **caractérisé en ce que** le dispositif de détection (50) comporte au moins un élément palpeur surfacique ou au moins un élément palpeur linéaire (52).

3. Engin de fraisage (1) selon la revendication 2, **caractérisé en ce que** l'élément palpeur (52) s'étend symétriquement à un axe central longitudinal (40) de la bande transporteuse (12) et/ou s'étend sensiblement parallèlement à distance de la bande transporteuse (12).

4. Engin de fraisage (1) selon la revendication 2 ou 3, **caractérisé en ce que** l'élément palpeur (52) du dispositif de détection (50) agit sur un capteur (56), qui génère le signal d'activation, en cas de contact avec un objet.

5. Engin de fraisage (1) selon la revendication 1 à 4, **caractérisé en ce que**, en présence d'un signal d'activation, la commande (3) génère un signal d'alarme et/ou un signal de ralentissement de la vitesse de la bande transporteuse.

6. Engin de fraisage (1) selon la revendication 2 à 5, **caractérisé en ce que** l'élément palpeur (52) est couplé à au moins un capteur (56) capacitif, inductif, optoélectronique ou actionnable mécaniquement.

7. Engin de fraisage (1) selon la revendication 2, **caractérisé en ce que** l'élément palpeur (52) est formée d'une pluralité de capteurs capacitifs, inductifs ou optoélectroniques (56) distribués sur une ligne ou une surface.

8. Engin de fraisage (1) selon la revendication 2 ou 3, **caractérisée en ce que** l'élément palpeur (52) est formé d'au moins une barrière lumineuse.

9. Procédé de déchargement de matériau fraisé enlevé (14) d'un engin de fraisage automoteur (1) sur une surface de chargement (15) d'un véhicule de transport (10), dans lequel
- l'engin de fraisage (1) est commandé pour l'opération de conduite et de fraisage,
- le matériau fraisé (14) enlevé par un rouleau de travail (22) est rejeté sur la surface de chargement (15) d'un véhicule de transport (10) au moyen d'une bande transporteuse (12) qui peut pivoter latéralement d'un angle de pivotement par rapport au châssis (2) de l'engin de fraisage (1) et qui peut être déplacée, en termes de hauteur d'éjection, d'un angle d'élévation,
et
- un dispositif de détection (50) est utilisé sur la face inférieure de la bande transporteuse (12) pour le cas où la bande transporteuse (12) s'approche d'un objet, **caractérisé en ce que**
le dispositif de détection génère un signal d'activation dans le cas où la bande transporteuse (12) s'approche d'un objet et génère, en présence d'un signal d'activation, un signal de commande pour réduire la vitesse de propulsion ou arrêter l'engin et/ou augmente l'angle d'élévation de la bande transporteuse (12).

10. Procédé selon la revendication 9, **caractérisé en ce qu'**au moins un élément palpeur linéaire ou surfacique (52) est utilisé pour le dispositif de détection (50).

11. Procédé selon la revendication 9 ou 10, **caractérisé en ce qu'**un signal d'alarme ou un signal de ralentissement de la vitesse de la bande transporteuse est généré en présence d'un signal d'activation.

12. Procédé selon l'une des revendications 9 à 11, **caractérisé en ce que** le positionnement d'un point d'impact (16) du matériau fraisé (14) sur la surface de chargement (15) est commandé automatiquement.

13. Unité de traitement de route ou de sol, constituée d'un engin de fraisage automoteur (1) et d'au moins un véhicule de transport (10) qui peut être déplacé indépendamment de l'engin de fraisage (1) et qui peut être positionné par rapport à l'engin de fraisage (1) de telle sorte que le matériau fraisé (14), enlevé par l'engin de fraisage (1), peut être chargé sur le véhicule de transport (10),
**caractérisée par**
un engin de fraisage (1) présentant les caractéristiques des revendications 1 à 8.
